Europäisches Patentamt

European Patent Office

Office européen des brevets

(11) Publication number: 0 382 353 A2

# EUROPEAN PATENT APPLICATION

(21) Application number: 90300525.4

(51) Int. Cl.5: G06F 3/023

(22) Date of filing: 18.01.90

(30) Priority: 10.02.89 US 309840

(43) Date of publication of application:
16.08.90 Bulletin 90/33

(84) Designated Contracting States:
DE FR GB

(71) Applicant: Hewlett-Packard Company
3000 Hanover Street
Palo Alto California 94304(US)

(72) Inventor: Long, Shyh Lai
476 Lorong 3, Geylang
Singapore 1438(SG)
Inventor: Ramachandran, Hariram
12 Jalan Tempua
Singapore 1129(SG)

(74) Representative: Colgan, Stephen James et al
CARPMAELS & RANSFORD 43 Bloomsbury
Square
London WC1A 2RA(GB)

(54) Cursor control mechanism.

(57) A hand-controlled mechanism is described for producing signals to move the position of the cursor in a computer display. The mechanism includes a shaft with an elongated axis and a cylindrical member (10) mounted coaxially around a portion of the shaft, the member and shaft being rotatable together with the member (10) being additionally, slidable along the elongated axis of the shaft. Conductive bar (36,38) and commutator strips (40,44) are disposed parallel to the shaft's elongated axis. Contact brushes (30,32) are coupled to the cylindrical member (10) and are movable therewith and are additionally, provide a conductive bridge between the conductor bar and the commutator strip. As the cylindrical member (10) is moved along the shaft, the brushes (30,32) move along the conductive bar/commutator strip arrangement and provide pulsed signals. A decoder (80) produces signals indicative of the movement of the brushes, which signals are employed to move the position of a display cursor.

FIG. 1a

## FIELD OF THE INVENTION

This invention relates to apparatus for controlling an alpha-numeric display device and, more particularly, an apparatus for controlling the position of an indicator on the screen of a display device.

## BACKGROUND OF THE INVENTION

The mouse is a commonly used input device for computer display terminals, and provides signals to control the position of a cursor on the display face. The mouse is configured as a small, box-like device and is placed on and moved over a flat surface in various directions. As position changing signals are generated by the mouse, they are transmitted to the terminal which causes a corresponding movement of the cursor.

While the mouse is useful for many applications, it requires that one hand be withdrawn from the terminal's keyboard to control its movement. Recently, a new mechanism has been developed which provides directional control signals for a cursor, but allows both of the users hands to remain in contact with the keyboard. In U.S. Patent 4,712,101 to C. F. Culver, this mechanism is shown as comprising a rotatable shaft on which a cylinder has been mounted. The mechanism is constructed as part of or adjacent to a keyboard and is positioned on the user side of the shift bar. In one configuration, it comprises a separate entity which sits immediately in front of the keyboard.

Rotation of the cylinder rotates the shaft; however, the cylinder is also able, simultaneously, to translate longitudinally along the axis of the shaft. One encoder is coupled to the shaft and provides rotary shaft movement signals which control one direction of movement of the cursor. Another encoder is coupled to the cylinder and provides a signal indicative of its longitudinal movement. That signal is employed to control the cursor's movement in a second direction on the display. As a result of this structure, a cursor' s position in the display is controllable by the action of one hand both rotating and translating the cylinder while it remains in contact with the keyboard.

Culver employs a variety of encoders to derive his motion signals. In one version, he employs a code wheel rotatable with the shaft and a second encoder wheel which is operated by a cable connected to the cylinder. In another version, the rotary wheel is coupled to the shaft by a gear arrangement while longitudinal movement is sensed by a linear encoder directly coupled to the cylinder. In still another version, Culver suggests the use of a linear resistive strip for longitudinal position sensing.

In U.S. Patent 4,724,715 Culver further describes a number of design modifications to the structures shown in his '101 patent. Those modifications revolve about the use of analogue elements as position sensors rather than the digital encoders shown in his earlier patent.

Despite the acknowledged benefits of Culver's input mechanism, his implementations are expensive and some are difficult to maintain in adjustment when operated by the user.

Accordingly, it is an object of this invention to provide an improved cursor control mechanism.

It is another object of this invention to provide a cursor control mechanism which is inexpensive and easily maintainable.

## SUMMARY OF THE INVENTION

A hand-controlled mechanism is described for producing signals to move the position of the cursor in a computer display. The mechanism includes a shaft with an elongated axis and a cylindrical member mounted coaxially around a portion of the shaft, the cylindrical member and shaft being rotatable together. The cylindrical member is additionally slidable along the elongated axis of the shaft. Conductive means and commutator strip means are disposed parallel to the shaft's elongated axis. Contact means, coupled to the cylindrical member, are moveable therewith and provide a conductive bridge between the conductive means and the commutator strip means. As the cylindrical member is moved along the shaft, the contact means moves along the conductive means/commutator strip means. Decoder means are coupled between the conductive means and the commutator strip means and sense signals indicative of the movement of the contact means, which signals are employed to move the position of a display cursor.

## DESCRIPTION OF THE DRAWINGS

Fig. 1 is a partial perspective view of one version of the invention.

Fig. 1a is a partial perspective view of the invention when in place in a keyboard.

Fig. 2 is a plan view of the commutator strip/conductor bar/brush mechanism employed with the invention.

Fig. 3 is a sectional view of Fig. 2 taken along line 3-3.

Fig. 4 is a chart of waveforms helpful in understanding the operation of the invention.

Fig. 5 is a high level schematic of the invention.

DETAILED DESCRIPTION OF THE INVENTION

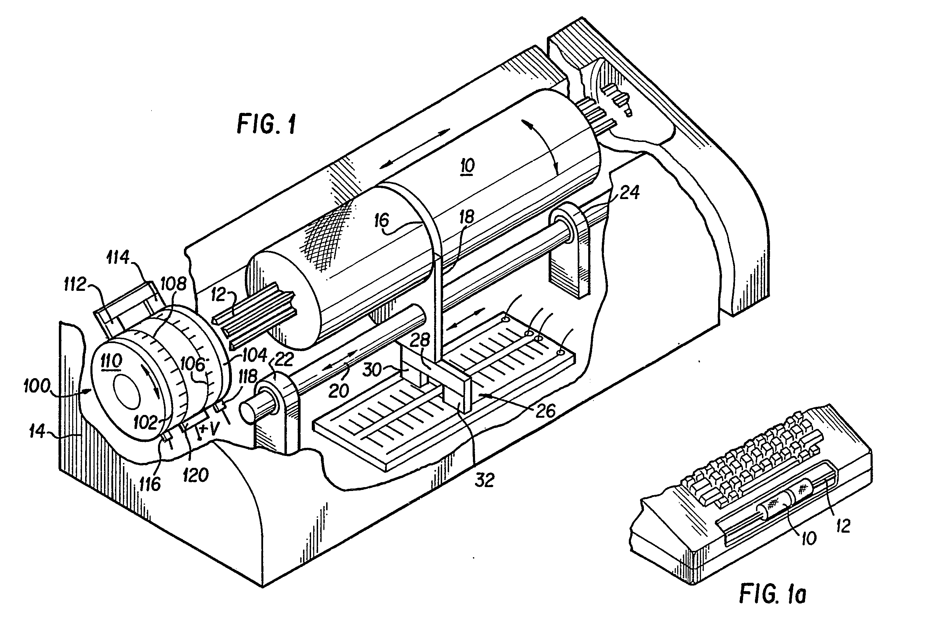

Referring to Fig. 1, the cursor control mechanism comprises a cylindrical member 10 which is mounted on a splined shaft 12. Shaft 12 is mounted for rotary motion in journals (not shown) within housing 14. The splines on shaft 12 interact with grooves (not shown) within cylindrical member 10 and provide for the simultaneous rotation of cylindrical member 10 with shaft 12. Cylindrical member 10 is able additionally, under hand pressure, to be moved along the longitudinal axis of shaft 12.

Intermediate the ends of cylindrical member 10, there is a circumferential slot 16. Follower member 18 slidably fits within slot 16 and moves to the right or to the left as slot 16 moves in accordance with the movement of cylindrical member 10. A shaft 20 passes through and is affixed to follower 18 and is further slidably held by mounts 22 and 24. Shaft 20 merely provides a positional stabilizing effect for follower 18 as it moves under control of slot 16. A dual brush assembly 26 is attached to the lowermost portion of follower 18 and includes insulating bar 28 which supports conductive brushes 30 and 32. Brushes 30 and 32 ride in contact with a commutator assembly 34.

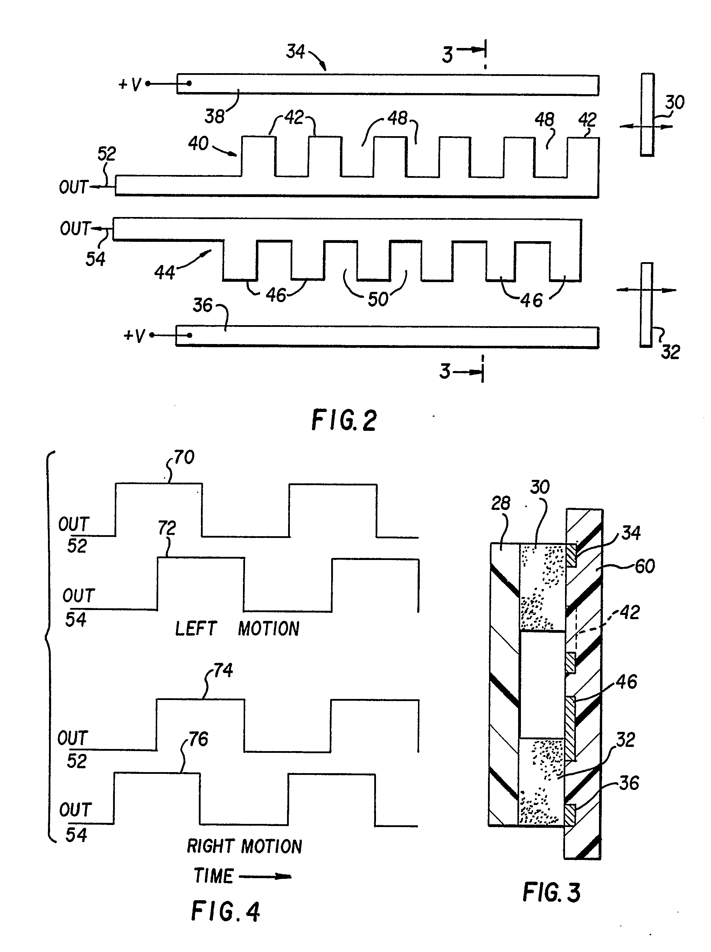

The details of commutator assembly 34 can best be viewed by referring to Fig. 2. The assembly includes two elongated conductor bars 36 and 38, both of which are powered from a voltage supply V. A first commutator strip 40 is positioned parallel to conductor bar 38 and has a plurality of conductive fingers 42 interspersed with insulating spaces 48. A second commutator bar 44 is positioned beside and parallel to conductor 36 and is provided with a plurality of fingers 46 interspersed with insulating spaces 50. It should be noted that conductive fingers 42 and 46 are offset by approximately 1/2 of the width of a conductive finger.

Conductive brush 30 rides over the surfaces of conductor bar 38 and commutator strip 40 and makes intermittent contact between the two as it passes over fingers 42 and spaces 48. In a similar manner, brush 32 makes intermittent contact between commutator strip 44 and conductor bar 36 as it rides over fingers 46 and spaces 50. The circuit's outputs are sensed at output terminals 52 and 54.

A section taken along line 3-3 in Fig. 2 is shown in Fig. 3. Both of the conductor bar/commutator strip assemblies are supported on circuit board 60. Brushes 30 and 32 are shown in place over the commutator strip/conductor bar assemblies.

In operation, assuming that brushes 30 and 32 are moving to the left in Fig. 2, brush 30 initially provides electrical contact between a finger 42 and conductor bar 38. As shown in Fig. 4, the result is that the voltage level at output 52 rises as shown by waveform 70. Shortly thereafter, brush 32 makes electrical contact between a finger 46 and conductor bar 36. This causes the output at terminal 54 to rise as shown by waveform 72. When brush 30 arrives at insulating space 48, the connection is broken between conductor bar 38 and commutator strip 40 thereby causing the output to fall (see waveform 70). A short time later, a similar fall occurs at terminal 54 due to the arrival of brush 32 at an insulating space 50, thereby causing a break in electrical contact between conductor bar 36 and commutator strip 44.

When brushes 30 and 32 are caused to move to the right, exactly the opposite occurs as shown by waveforms 74 and 76 in Fig. 4.

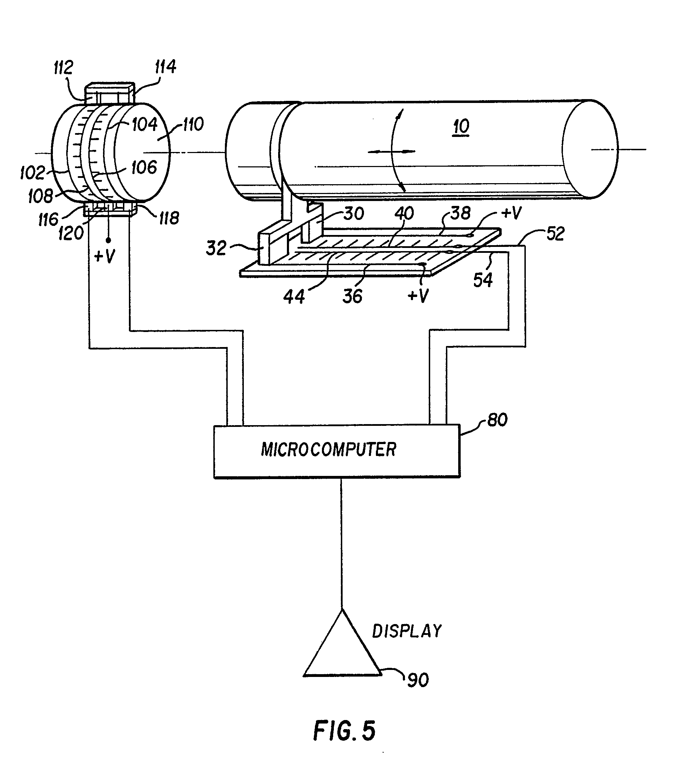

In Fig. 5, a schematic is shown of the invention with the elements illustrated therein being numbered identically as in Figs. 1, 2 and 3. It can be seen that the outputs appearing on output terminals 52 and 54 are applied to microcomputer 80 allowing the speed and direction of movement of brushes 32 and 30 (and thus the longitudinal movement of cylindrical element 10) to be determined.

While the speed of movement of the brush assembly may be determined by many well-known methods, one preferred technique is to provide an output pulse to move the cursor on display 90 each time there is a step change in voltage on one or the other of outputs 52 and 54. In this manner, the speed of movement of the cursor is directly related to the speed of movement of cylindrical member 10. The direction of movement is determined within microcomputer 80 by determining which output line 52 or 54 voltage rises first. If output line 52 rises before output line 54, then it is known that the motion is to the left. In such circumstance, an appropriate signal is provided to display 90 to move the cursor to the left. In a similar manner, if the output on line 54 rises before the output on line 52, then the movement of the cursor is to the right and it is controlled accordingly by microcomputer 80.

Referring now back to Figs. 1 and 5 in conjunction, a similar sensing arrangement 100 is shown to the left of cylindrical member 10, but is for the purpose of determining both the speed and direction of rotary motion of member 10. Conductor bars 102 and 104 as well as commutator strips 106 and 108 are mounted on wheel 110, which wheel is, in turn, fixedly attached to shaft 12. Shorting brushes 112 and 114 are fixed and span the conductor bar commutator strips respectively. The signal outputs are taken from brushes 116 and 118 and the powering potential V is applied via brush 120 which spans both commutator strips 106 and 108. The outputs from brushes 118 and 116 are applied to microcomputer 80 and the analysis of the signal outputs therefrom is identical to that previously described with respect to the output signals appearing on terminals 52 and 54. In this case however, the analysis is applied to provide vertical movement signals for the cursor on display 90 and the action (and direction) of the signals to move the cursor are as aforedescribed.

As shown in Fig. 1, the cursor control mechanism may be mounted as a separate entity directly in front of the keyboard structure. Under these conditions, the mechanism abuts the front of the keyboard and has an upper surface whose slope approximately matches that of the keyboard so as to be ergonomically pleasing. On the other hand, as shown in Fig. 1a, the cursor control mechanism may be mounted in the frontal portion of the keyboard, preferably on the user's side of the shift bar. In such case, the mechanism is located adjacent to the front face of the keyboard where it can be operated by the fingers, thumb or palm of the user's hand. When so operated, the cursor control mechanism permits the fingers of both hands to be substantially free to manipulate the keyboard keys.

It is to be understood that the above described embodiments of the invention are illustrative only and that modifications throughout may occur to those skilled in the art. Accordingly, this invention is not to be regarded as limited to the embodiments disclosed herein, but is to be limited as defined by the appended claims.

## Claims

1. A hand-controlled mechanism for producing signals to move the position of a cursor in a computer display, the mechanism comprising:
a shaft (12) having an elongated axis;
a cylindrical member (10) mounted coaxially around a portion of said shaft, said member being both rotatable about and slidable along said elongated axis;
conductive means (34,36) disposed parallel to said elongated axis;
commutator strip means (40,44), disposed parallel to said elongated axis, having alternating conductive and insulating areas;
contact means (30,32) movable with said cylindrical member (10) along said elongated axis, said contact means bridging between said conductive means and said commutator strip means; and
decoder means (80) coupled between said conductive means (34,36) and said commutator strip means (40,44) for producing a signal indicative of the movement of said contact means, said signal usable to cause movement of the position of said cursor.

2. A mechanism according to claim 1, wherein said commutator strip means (26) includes at least first and second alternating conductive areas (42,46), said first conductive areas (42) and second conductive areas (46), positionally offset from each other along said elongated axis whereby the direction of movement of said control means is determinable.

3. A mechanism according to claim 2, wherein said commutator strip means (26) comprises at least two independent commutator strips (40,44) each strip having conductive fingers (42,46) of discrete width which alternate with insulating areas (48,50), said conductive fingers (42) of one said commutator strip (40) offset in position from the conductive fingers (46) of the second commutator strip (44) by less than the dimension of said discrete width, all said fingers in each commutator strip being connected together electrically.

4. A mechanism according to claim 3, wherein said conductive means comprises an elongated conductor bar (36,38) positioned parallel to each said commutator strip, each said conductor bar having a voltage applied thereto.

5. A mechanism according to claim 4, wherein said contact means comprises a pair of conductive brushes (30,32), one said brush (30) bridging between one said conductor bar (34) and a first commutator strip (42) and the other said brush (32) bridging between another said conductor bar (36) and a second commutator strip (46), the movement of said contact means causing said decoder means to receive independent pulse-train signals when said contact means is moved relative to said commutator strips, the phase relationship of said pulse trains being indicative of the direction of movement of said contact means.

6. A mechanism according to claim 5, further comprising:
commutator strip means (106,108) and elongated conductive means (102,104), both said means mounted for rotary movement in accordance with the rotational movement of said cylindrical member (10);
output means (116,118,120) for providing signal outputs indicative of relative movement between said commutator strip means and said elongated conductive means;
stationary contact means (112,114) bridging between said commutator strip means and said elongated conductive means; and

decoder means (80) responsive to said signal outputs from said output means to produce a signal indicative of relative movement between said contact means and said commutator strip means and elongated conductive means.

7. A mechanism according to claim 6, wherein said commutator strip means comprises at least two independent commutator strips (106,108), each strip having conductive fingers of discrete width which alternate with non-conductive areas, said conductive fingers of one said commutator strip offset in position from the conductive fingers of the second commutator strip by less than the dimension of said discrete width, all said fingers in each commutator strip being connected together electrically.

8. A mechanism according to claim 7, wherein said contact means comprises a pair of conductive brushes (112,114), one said brush bridging between one said elongated conductive means (102) and a first commutator strip (108) and the other said brush (114) bridging between another said elongated conductive means (104) and a second commutator strip (106) relative movement between said contact means and said commutator strip means and said elongated conductive means causing said decoder means to receive independent pulse-train signals indicative of said movement, the phase relationship of said pulse trains being indicative of the relative direction of movement therebetween.

FIG. 1

FIG. 1a

FIG. 2

FIG. 4

FIG. 3

LEFT MOTION

RIGHT MOTION

TIME ⟶

FIG. 5